# EUROPEAN PATENT APPLICATION

(11) **EP 4 815 552 A1**
(43) Date of publication of application: **30.09.2026**
(21) Application number: 23959403.9
(22) Date of filing: 20.11.2023
(51) Int. Cl.: H04W 28/06, H04W 72/0446, H04W 72/0453, H04W 72/231, H04W 72/232

(54) **BASE STATION AND RADIO COMMUNICATION METHOD**

(71) Applicant: NTT DOCOMO, INC., Tokyo 100-6150 (JP)
(72) Inventor: KURITA Daisuke, Tokyo 100-6150 (JP); HARADA Hiroki, Tokyo 100-6150 (JP); PI Qiping, Beijing 100190 (CN); WANG Jing, Beijing 100190 (CN); LIU Wenjia, Beijing 100190 (CN); HOU Xiaolin, Beijing 100190 (CN); CHEN Lan, Beijing 100190 (CN)
(74) Representative: Hoffmann Eitle
(86) International application number: PCT/JP2023/041663
(87) International publication number: WO 2025/109658

(57) **Abstract**

A base station includes a transmission unit configured to notify that the base station operates in a first duplex scheme in which transmission and reception are performed using resources overlapping in a time domain and a frequency domain, and notify a position of a subband in a second duplex scheme in which transmission or reception is performed for each subband constituting a band of a time division duplex scheme; and a control unit configured to indicate a transmission/reception direction of each terminal in the resources or the subband via a terminal-specific parameter.

## Description

### TECHNICAL FIELD

The present disclosure relates to a base station and a radio communication method that operate in full duplex.

### BACKGROUND ART

The 3rd Generation Partnership Project (3GPP (registered trademark)) has specified the 5th generation mobile communication system (also referred to as 5G, New Radio (NR), or Next Generation (NG)), and is also proceeding with the specification of the next generation mobile communication system called Beyond 5G, 5G Evolution, or 6G.

In Release 18, a duplex scheme is under discussion in which a base station (hereinafter also referred to as a gNodeB (gNB)) recognizes a band of Time Division Duplex (TDD) as a plurality of subbands, thereby enabling simultaneous use of Downlink (DL) and Uplink (UL) (Non-Patent Literature 1). Such a duplex scheme is referred to as SubBand non-overlapping Full Duplex (SBFD). Note that, even if the recognition of the gNB is SBFD, the recognition of a terminal (hereinafter also referred to as a user equipment (UE)) is DL or UL. That is, even in a case where the gNB operates according to SBFD, the UE operates according to Half Duplex (HD).

Further extension of the duplex scheme is under study in the gNB and the UE. Specifically, Full Duplex (FD) using resources (time/frequency resources) overlapping in a time domain and a frequency domain is under study (Non-Patent Literature 2).

### CITATION LIST

### NON-PATENT LITERATURE

Non-Patent Literature 1: "Study on Evolution of NR Duplex Operation", RP-213591, 3GPP TSG RAN#94-e, 3GPP, Dec. 6 - 17, 2021
Non-Patent Literature 2: "Evolution of NR duplex operation", RWS-230249, 3GPP TSG RAN Rel-19 workshop, NTT DOCOMO, INC., June. 15 - 16, 2023

### SUMMARY OF INVENTION

Conventionally, there has been no mechanism for notifying the UE side of which duplex scheme the gNB operates in. However, when the gNB operates in FD (and HD), or operates in a combination of FD (and HD) and the above-described SBFD, it is expected that self-interference will become larger and more complex than ever before. Therefore, it is considered necessary for the UE side to recognize that the gNB operates in FD.

Here, assuming that the UE side is notified that the gNB operates in FD, in order to realize FD, it is necessary to indicate the direction of resources (DL/UL) as viewed from the UE. Use of cell-specific signaling is conceivable to indicate the direction of resources (DL/UL) as viewed from the UE.

However, if cell-specific signaling is used, the indication is uniformly given to UEs in the cell. For this reason, there is a concern that flexible resource allocation by FD cannot be fully utilized.

Therefore, the present disclosure has been made in view of such circumstances, and an object thereof is to provide a base station and a radio communication method capable of realizing flexible resource allocation by FD when notifying a terminal that the base station operates in FD.

One aspect of the disclosure is a base station including a transmission unit (radio signal transmission/reception unit 110) configured to notify that the base station operates in a first duplex scheme in which transmission and reception are performed using resources overlapping in a time domain and a frequency domain, and notify a position of a subband in a second duplex scheme in which transmission or reception is performed for each subband constituting a band of a time division duplex scheme, and a control unit (control unit 170) configured to indicate a transmission/reception direction of each terminal in the resources or the subband via a terminal-specific parameter.

One aspect of the disclosure is a radio communication method including the steps of notifying that operation is performed in a first duplex scheme in which transmission and reception are performed using resources overlapping in a time domain and a frequency domain; notifying a position of a subband in a second duplex scheme in which transmission or reception is performed for each subband constituting a band of a time division duplex scheme; and indicating a transmission/reception direction of each terminal in the resources or the subband via a terminal-specific parameter.

### BRIEF DESCRIPTION OF DRAWINGS

[Fig. 1] Fig. 1 is an overall schematic configuration diagram of a radio communication system.
[Fig. 2] Fig. 2 is a diagram showing frequency ranges used in the radio communication system.
[Fig. 3] Fig. 3 is a diagram showing a configuration example of a radio frame, a subframe, a slot, and a symbol used in the radio communication system.
[Fig. 4] Fig. 4 is a functional block diagram of a base station.
[Fig. 5] Fig. 5 is a functional block diagram of a terminal.
[Fig. 6] Fig. 6 is a diagram showing recognition of a base station operating in FD and recognition of a terminal operating in HD.
[Fig. 7] Fig. 7 is a diagram showing an example of radio communication between a base station operating in FD and a terminal operating in HD.
[Fig. 8] Fig. 8 is a diagram showing recognition of a base station operating in SBFD.
[Fig. 9] Fig. 9 is a diagram showing an example of radio communication between a base station operating in FD and SBFD, and a terminal operating in HD.
[Fig. 10] Fig. 10 is a diagram showing an example of a hardware configuration of the base station and the terminal.
[Fig. 11] Fig. 11 is a diagram showing a configuration example of a vehicle.

### DESCRIPTION OF EMBODIMENTS

Hereinafter, embodiments will be described based on the drawings. Note that the same functions and configurations are denoted by the same or similar reference numerals, and descriptions thereof are omitted as appropriate.

### (1) Configuration of Radio Communication System

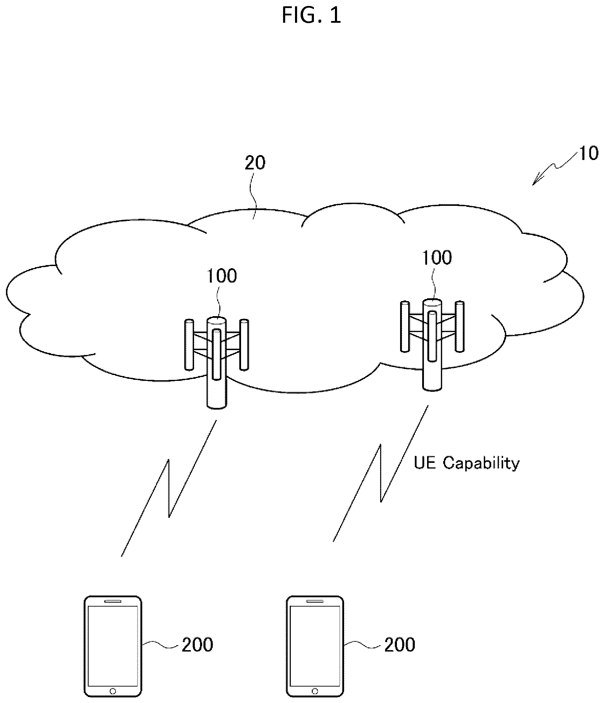

A radio communication system 10 shown in Fig. 1 is a radio communication system according to a scheme called 5G. On the other hand, the radio communication system 10 may be a radio communication system according to a scheme called Beyond 5G, 5G Evolution, or 6G.

The radio communication system 10 can support Massive Multiple-Input Multiple-Output (Massive MIMO) that generates a beam with higher directivity by controlling radio signals transmitted from a plurality of antenna elements, Carrier Aggregation (CA) that bundles and uses a plurality of component carriers (CCs), Dual Connectivity (DC) that performs simultaneous communication with two base stations, and the like.

As shown in Fig. 1, the radio communication system 10 includes a Next Generation-Radio Access Network (NG-RAN) 20, a base station (hereinafter also referred to as a gNodeB (gNB)) 100 connected to the NG-RAN 20, and a terminal (hereinafter also referred to as a user equipment (UE)) 200 that performs radio communication with the gNB 100. The NG-RAN 20 is connected to a core network (CN) (not shown). The NG-RAN 20 and the CN may be simply expressed as a "network". Further, the gNB 100 may be understood to be included in the network. Note that the specific configuration of the radio communication system 10, for example, the numbers of gNBs 100 and UEs 200, is not limited to the example shown in Fig. 1.

The radio communication system 10 can support various duplex schemes. First, the radio communication system 10 supports Time Division Duplex (TDD) and Frequency Division Duplex (FDD). These duplex schemes may be referred to as Half Duplex (HD). Further, the radio communication system 10 supports a duplex scheme that enables simultaneous use of Downlink (DL) and Uplink (UL) by recognizing a band of Time Division Duplex (TDD) as a plurality of subbands. This duplex scheme may be referred to as SBFD.

Furthermore, the radio communication system 10 supports Full Duplex (FD) in which transmission and reception are performed using resources overlapping in a time domain and a frequency domain. FD may be understood as realizing duplex in the frequency domain on the premise of Time Division Duplex (TDD), or may be understood as realizing duplex in the time domain on the premise of Frequency Division Duplex (FDD).

Note that, when SBFD is applied in the radio communication system 10, even if the recognition of the gNB 100 is SBFD, the recognition of the UE 200 is DL or UL. That is, even in a case where the gNB 100 operates according to SBFD, the UE 200 operates according to HD. Similarly, when FD is applied in the radio communication system 10, even if the recognition of the gNB 100 is FD, the recognition of the UE 200 is DL or UL. That is, even in a case where the gNB 100 operates according to FD, the UE 200 operates according to HD.

Hereinafter, a symbol/slot to which FD is applied as a duplex scheme may be referred to as an FD symbol/slot. Also, a symbol/slot to which SBFD is applied may be referred to as an SBFD symbol/slot.

"FD is applied" may be understood as that FD is applied in at least a part of scheduling. That is, even in a case where FD is applied, the FD symbol/slot may coexist with the above-described SBFD symbol/slot and HD symbol/slot. Similarly, "SBFD is applied" may be understood as that SBFD is applied in at least a part of scheduling. That is, even in a case where SBFD is applied, the SBFD symbol/slot may coexist with the above-described FD symbol/slot and HD symbol/slot.

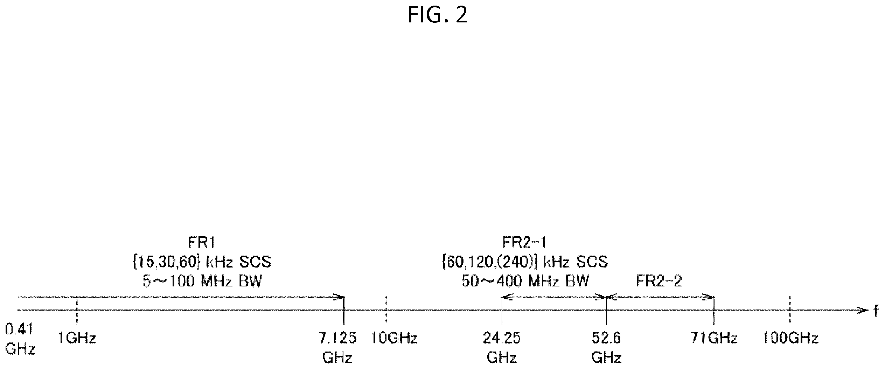

Further, the radio communication system 10 may correspond to a plurality of frequency ranges (FRs). That is, as shown in Fig. 2, the radio communication system 10 may correspond to the following FRs.
- FR1: 410 MHz to 7.125 GHz
- FR2-1: 24.25 GHz to 52.6 GHz
- FR2-2: Over 52.6 GHz to 71 GHz

In FR1, a SubCarrier Spacing (SCS) of 15, 30, or 60 kHz and a Bandwidth (BW) of 5 to 100 MHz may be used. In FR2-1, an SCS of 60 or 120 kHz (240 kHz may be included) and a BW of 50 to 400 MHz may be used.

In FR2-2, in order to avoid an increase in phase noise, Cyclic Prefix-Orthogonal Frequency Division Multiplexing (CP-OFDM) or Discrete Fourier Transform-Spread-Orthogonal Frequency Division Multiplexing (DFT-S-OFDM) having a larger SCS may be applied.

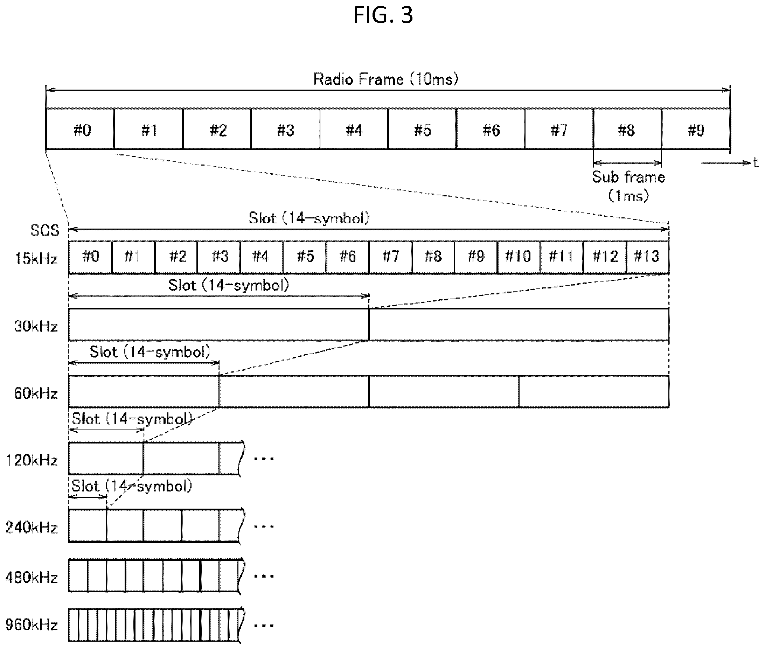

Further, as shown in Fig. 3, one slot in the radio communication system 10 is composed of 14 symbols. When this configuration is maintained, the larger (wider) the SCS, the shorter the symbol period (and slot period). Note that the SCS is not limited to the frequencies shown in Fig. 3, and may be frequencies such as 480 kHz and 960 kHz, for example.

Also, the number of symbols constituting one slot does not necessarily have to be 14 symbols, and may be, for example, 28 or 56 symbols. Furthermore, the number of slots per subframe may vary depending on the SCS.

### (2) Functional Block Configuration of Radio Communication System

### (2.1) Functional Block Configuration of Base Station

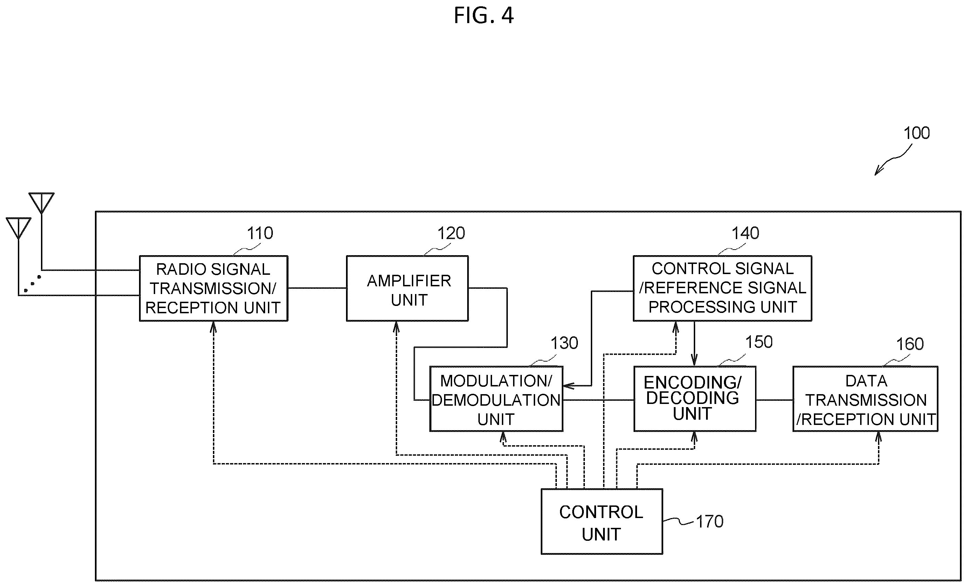

As shown in Fig. 4, the gNB 100 comprises a radio signal transmission/reception unit 110, an amplifier unit 120, a modulation/demodulation unit 130, a control signal/reference signal processing unit 140, an encoding/decoding unit 150, a data transmission/reception unit 160, and a control unit 170.

The radio signal transmission/reception unit 110 transmits and receives radio signals to and from the UE 200. The radio signal transmission/reception unit 110 may constitute a transmission unit that transmits radio signals to the UE 200 and a reception unit that receives radio signals from the UE 200. Transmission may be read as configuration, indication, notification, and the like. Also, reception may be read as report (reporting), notification (notifying), and the like. Note that the configuration may be realized by configuration information (Information Element (IE)) of a Radio Resource Control (RRC) layer, and the indication may be realized by a Control Element (CE) of a Medium Access Control (MAC) layer or Downlink Control Information (DCI).

The radio signal transmission/reception unit 110 of the embodiment can notify that the gNB 100 operates in a full duplex scheme (hereinafter also referred to as FD or a first duplex scheme) in which transmission and reception are performed using resources overlapping in a time domain and a frequency domain.

FD in the present specification may be understood as realizing duplex in the frequency domain on the premise of Time Division Duplex (TDD), or may be understood as realizing duplex in the time domain on the premise of Frequency Division Duplex (FDD). Therefore, FDD and TDD in the present specification are not understood as FD but as Half Duplex (HD). Note that HD exemplified in the operation examples is assumed to be TDD.

FD may be realized by reducing self-interference. For example, FD may be realized by the gNB 100 separating and transmitting beams with high directivity such as terahertz waves to each UE 200. Also, FD may be realized by spatially separating a transmission unit and a reception unit in the gNB 100. In other words, FD may be realized by performing radio communication for each space. On the other hand, FD may be realized by an approach that does not reduce self-interference. For example, FD may be realized by the gNB 100 grasping scheduling of another gNB 100 and canceling all DL signals by the other gNB 100. Thereby, the gNB 100 can extract (decode) a UL signal from a mixture of DL signals/UL signals.

The radio signal transmission/reception unit 110 of the embodiment can notify that the gNB 100 operates in SBFD (hereinafter also referred to as a second duplex scheme). SBFD is a duplex scheme that enables simultaneous use of DL and UL by recognizing a band of TDD as a plurality of subbands. That is, SBFD is a duplex scheme in which transmission or reception is performed for each subband constituting a band of TDD. Furthermore, SBFD can be said to be a duplex scheme in which a plurality of subbands are defined within a band of TDD, or can be said to be a duplex scheme in which UL and DL are allocated non-overlappingly in a frequency direction within a unit time (e.g., symbol/slot) of TDD.

The radio signal transmission/reception unit 110 of the embodiment can notify positions of subbands in SBFD.

The amplifier unit 120 is composed of a Power Amplifier (PA)/Low Noise Amplifier (LNA) or the like. The amplifier unit 120 amplifies the radio signal output from the radio signal transmission/reception unit 110. Also, the amplifier unit 120 amplifies the radio signal output from the modulation/demodulation unit 130.

The modulation/demodulation unit 130 executes data modulation/demodulation, transmission power setting, resource block allocation, and the like for each predetermined communication destination (UE 200 or another UE). In the modulation/demodulation unit 130, CP-OFDM/DFT-S-OFDM may be applied. Also, DFT-S-OFDM may be used not only for Uplink (UL) but also for Downlink (DL).

The control signal/reference signal processing unit 140 executes processing regarding control signals transmitted and received to and from the UE 200, for example, Radio Resource Control (RRC) signaling.

The control signal/reference signal processing unit 140 executes processing regarding reference signals transmitted and received to and from the UE 200, for example, Demodulation Reference Signal (DMRS), Phase Tracking Reference Signal (PTRS), Channel State Information-Reference Signal (CSI-RS), Sounding Reference Signal (SRS), and Positioning Reference Signal (PRS).

Note that channels include a control channel and a data channel. The control channel includes a Physical Uplink Control Channel (PUCCH), a Physical Downlink Control Channel (PDCCH), a Physical Random Access Channel (PRACH), a Physical Broadcast Channel (PBCH), and the like. The data channel includes a Physical Uplink Shared Channel (PUSCH), a Physical Downlink Shared Channel (PDSCH), and the like.

The encoding/decoding unit 150 executes division/concatenation and coding/decoding of data included in the radio signal for each predetermined communication destination (UE 200 or another UE).

Specifically, the encoding/decoding unit 150 decodes data output from the modulation/demodulation unit 130 and concatenates the decoded data. Also, the encoding/decoding unit 150 divides data output from the data transmission/reception unit 160 into a predetermined size and executes coding on the divided data.

The data transmission/reception unit 160 executes assembly/disassembly of data units (Protocol Data Unit (PDU)/Service Data Unit (SDU)) constituting data, and the like, between respective layers. The plurality of layers are a Medium Access Control (MAC) layer, a Radio Link Control (RLC) layer, a Packet Data Convergence Protocol (PDCP) layer, and the like. Also, the data transmission/reception unit 160 executes error correction and retransmission control of data based on Hybrid Automatic Repeat Request (HARQ).

The control unit 170 controls the gNB 100. The control unit 170 controls, for example, transmission and reception of radio signals by the radio signal transmission/reception unit 110, amplification by the amplifier unit 120, data modulation/demodulation by the modulation/demodulation unit 130, signal processing by the control signal/reference signal processing unit 140, coding/decoding by the encoding/decoding unit 150, and assembly/disassembly of data units by the data transmission/reception unit 160. Also, the control unit 170 executes scheduling for the UE 200.

The control unit 170 of the embodiment can indicate a transmission/reception direction of each UE 200 in the above-described resources overlapping in the time domain and the frequency domain (hereinafter also referred to as FD resources) via a terminal-specific parameter.

The control unit 170 of the embodiment can indicate the transmission/reception direction of each UE 200 via the terminal-specific parameter not only in the FD resources but also in the subbands of SBFD described above.

Note that the transmission/reception direction in the present specification is not limited to UL/DL and may be understood to include Flexible (F). In the case of F, "direction" may be read as "state". The indication may be realized by broadcast information such as a System Information Block (SIB), semi-static signaling such as RRC configuration, or may be realized by dynamic signaling such as DCI or MAC CE.

The terminal-specific parameter is a parameter configured or indicated for each UE 200. The terminal-specific parameter may be read as terminal-specific signaling, a terminal-specific indicator, terminal-specific configuration information, and the like.

The terminal-specific parameter may be, for example, a terminal-specific Slot Format Indicator (hereinafter also referred to as US-SFI). The US-SFI indicates transmission/reception directions of symbols constituting a slot, that is, transmission/reception directions of symbols as viewed from the UE 200, similarly to the conventional SFI. The US-SFI may be included in terminal-specific DCI.

The control unit 170 may indicate positions of FD resources in the time domain and the frequency domain via the terminal-specific parameter. In this case, the terminal-specific parameter may be included in an RRC IE, or may be one that semi-statically indicates the positions of FD resources. Specifically, it may be a development of the conventional TDD-Config-Common and/or TDD-Config-Dedicated as the terminal-specific parameter, and may be referred to as FD-Config-Common and/or FD-Config-Dedicated for convenience. Also, the terminal-specific parameter may be included in DCI or MAC CE, and may be one that dynamically indicates the positions of FD resources. The terminal-specific parameter dynamically indicating the positions of FD resources may be referred to as a Full Duplex Indicator/Indication (FDI) for convenience.

Note that, when the indication is implicit, the symbol/slot to which FD is applied may be a symbol/slot satisfying at least one of the conditions shown below.
Condition 1: A symbol/slot configured to at least one of DL/F/UL by TDD-Config-Common (and/or TDD-Config-Dedicated)
Condition 2: A symbol/slot not configured to at least one of DL/F/UL by TDD-Config-Common (and/or TDD-Config-Dedicated)
Condition 3: A symbol/slot configured to at least one of DL/F/UL by Slot Format Indicator (SFI) (DCI format 2_0)
Condition 4: A symbol/slot not configured to at least one of DL/F/UL by SFI (DCI format 2_0)
Condition 5: A symbol/slot configured for Synchronization Signal Block (SSB) reception
Condition 6: A symbol/slot not configured for SSB reception
Condition 7: A symbol/slot configured for type-0 PDCCH monitoring (or CORESET#0 symbol)
Condition 8: A symbol/slot not configured for type-0 PDCCH monitoring (or CORESET#0 symbol)
Condition 9: A symbol/slot included in a valid PRACH occasion
Condition 10: A symbol/slot not included in a valid PRACH occasion

### (2.2) Functional Block Configuration of Terminal

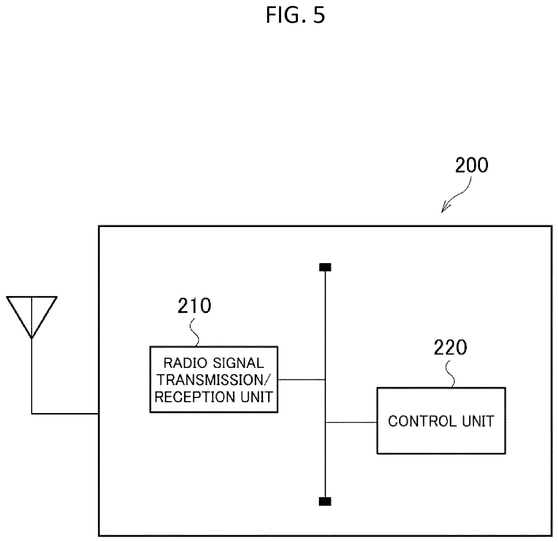

As shown in Fig. 5, the UE 200 comprises a radio signal transmission/reception unit 210 and a control unit 220.

The radio signal transmission/reception unit 210 transmits and receives radio signals to and from the gNB 100. The radio signal transmission/reception unit 210 may constitute a transmission unit that transmits radio signals to the gNB 100 and a reception unit that receives radio signals from the gNB 100. Transmission may be read as report, notification, and the like. Also, reception may be read as configuration (configured), indication (indicated), notification (notified), and the like. Note that the configuration may be realized by configuration information (Information Element (IE)) of a Radio Resource Control (RRC) layer, and the indication may be realized by a Control Element (CE) of a Medium Access Control (MAC) layer or Downlink Control Information (DCI).

The radio signal transmission/reception unit 210 of the embodiment may transmit UE capability information related to the FD operation or SBFD operation of the gNB 100 described above. Details of the UE capability information will be described in detail in the section of Operation Examples.

The radio signal transmission/reception unit 210 of the embodiment may be notified that the gNB 100 operates in FD, and may be further indicated with a transmission/reception direction (DL/UL) in the FD resources.

The radio signal transmission/reception unit 210 of the embodiment may be notified of positions of FD resources in a time direction and a frequency direction. Furthermore, the radio signal transmission/reception unit 210 of the embodiment may be notified of positions of subbands in SBFD.

The control unit 220 controls the UE 200. The control unit 220 controls, for example, transmission and reception of radio signals by the radio signal transmission/reception unit 210.

The control unit 220 of the embodiment may cause the radio signal transmission/reception unit 210 to execute transmission and reception according to an indication of a transmission/reception direction (DL/UL) in FD resources or subbands of SBFD.

### (3) Operation of Radio Communication System

### (3.1) Issues

### (3.1.1) Issue 1

Regarding the gNB operating in FD, whether or not to introduce new signaling for the UE to support this FD operation has not been studied. Also, whether or not to extend the UE operation when diverting existing signaling has not been studied.

### (3.1.2) Issue 2

Combination with SBFD when the gNB operates in FD has not been studied. For example, when operating in FD, the influence of self-interference is considered to be larger than when operating in SBFD, but such a problem has not been studied.

### (3.2) Operation Examples

### (3.2.0) Premise

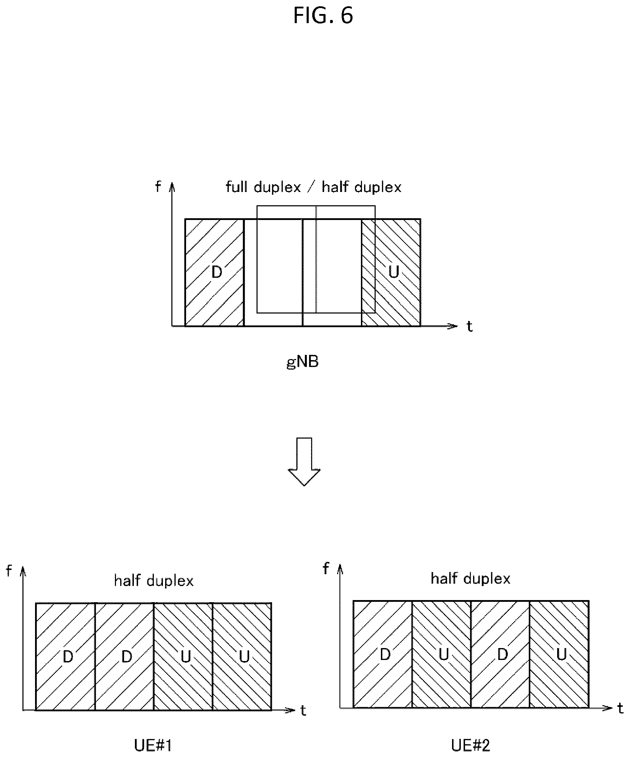

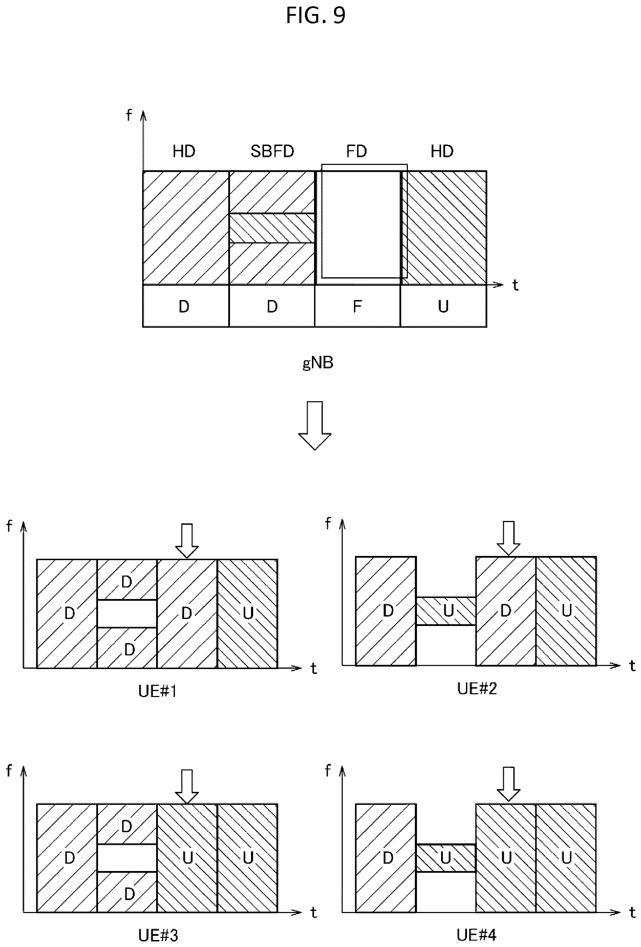

Premise of the operation example will be described with reference to Fig. 6. As shown in Fig. 6, the gNB 100 of the operation example can operate in FD. Operating in FD may mean operating only in FD, or may mean operating in combination of FD and HD as shown in Fig. 6. Furthermore, operating in FD may mean operating in combination of FD and SBFD, or may mean operating in combination of FD, SBFD, and HD (see Fig. 9). Note that FD is assumed to be applied to the entire bandwidth (BW), not a part of the BW available as resources. On the other hand, the UE 200 is assumed to operate only in HD.

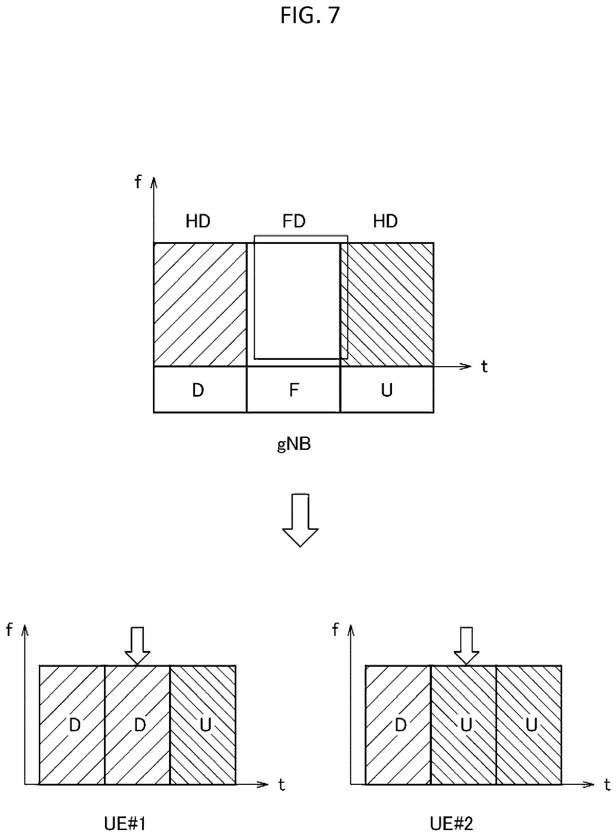

Fig. 6 shows an example where the gNB 100 operates in FD in 2 symbols/slots out of consecutive 4 symbols/slots. The gNB 100 can individually configure or indicate DL/UL for UE#1 and UE#2 in the 2 symbols/slots in which the gNB 100 operates in FD. Note that the example shown in Fig. 6 is an example, and DL/UL may be the same for UE#1 and UE#2 in the 2 symbols/slots in which the gNB 100 operates in FD. Note that, in Figs. 6 and 7, symbols/slots marked with "D" are DL symbols/slots, and symbols/slots marked with "U" are UL symbols/slots.

### (3.2.1) Operation Example 1

Operation example 1 will be described with reference to Fig. 7. In operation example 1, the gNB 100 operates in FD, and can also operate in combination of FD and HD. Also, as described in each option below, the FD operation of the gNB 100 may be transparent or non-transparent to the UE 200. That is, the FD operation of the gNB 100 may not be known or may be known to the UE 200. Note that Fig. 7 shows a state where the gNB 100 regards Flexible (F) symbols/slots (symbols/slots marked with "F" in the figure) as FD symbols/slots, and the UE 200 (UE#1, UE#2 in the figure) regards them as HD symbols/slots (see Option 3).

### (3.2.1.1) Option 1

The FD operation of the gNB 100 is transparent to the UE 200. That is, the UE 200 is not aware that the gNB 100 operates in FD.

When the gNB 100 operates in this transparent FD, the operation of the UE 200 (e.g., DL reception and/or UL transmission) cannot be processed separately for FD symbols and HD symbols. Such separate processing is considered to be beneficial, for example, when examining the possibility of separating transmission and reception by the gNB 100 for FD operation.

### (3.2.1.2) Option 2

The FD operation of the gNB 100 is non-transparent to the UE 200. That is, the UE 200 is aware that the gNB 100 operates in FD. However, the UE 200 is not aware of resources in the time and/or frequency domain in the FD operation.

The FD operation of the gNB 100 may be notified in advance via RRC/MAC CE/DCI or the like, but instead of such advance notification, it may be notified by an additional/new UE-specific signal (the terminal-specific parameter described above) itself described below. That is, the UE 200 can recognize that the gNB 100 is operating in FD by receiving this additional/new UE-specific signal, or by being indicated with an actual direction (DL/UL) as viewed from the UE 200 by this additional/new UE-specific signal. Note that, when the actual direction (DL/UL) as viewed from the UE 200 is indicated by the conventional SFI, the UE 200 may recognize that the gNB 100 is operating in HD.

In order to realize that the gNB 100 operates in FD (and HD), conventional NR TDD configuration information (TDD-Config-Common and/or TDD-Config-Dedicated) may be used (further, dynamic SFI by DCI format 2_0 may be used). In addition, an additional/new UE-specific signal may be used. SFI is not flexible enough for the gNB 100 to operate in FD. This is because DCI format 2_0 is a group-common indication, but the actual direction (DL/UL) of the FD symbol may be different for each UE 200. Therefore, a UE-specific signal indicating the actual direction (DL/UL) as viewed from the UE 200 is beneficial.

From the above, in Option 2, a UE-specific signal that dynamically indicates the actual direction (DL/UL) to the UE 200 may be newly supported for the gNB 100 to operate in FD. The UE-specific signal may be referred to as, for example, UE specific SFI (US-SFI).

The US-SFI may be via UE-specific DCI or MAC CE. When via UE-specific DCI, the UE-specific DCI may be based on an existing DCI format or a new DCI format, and may involve a Cyclic Redundancy Check (CRC) scrambled by an existing Radio Network Temporary Identifier (RNTI) (e.g., Cell-RNTI (C-RNTI)) or a new RNTI. Also, whether to monitor US-SFI and when to monitor it may be configured by RRC.

The content/details of the US-SFI indication may be similar to that of the group-common SFI via DCI format 2_0. For example,
- US-SFI can indicate a direction or state (D/U(/F)) for each symbol (or for each symbol configured to F).
- The UE 200 does not expect US-SFI to indicate U(/F) for a semi-static DL symbol, or indicate D(/F) for a semi-static UL symbol.
- When a semi-static F symbol is indicated as D/U by US-SFI, the actual direction of the symbol is DL/UL. That is, the UE 200 performs only DL reception or UL transmission in the symbol.
- When a semi-static F symbol is indicated as F by US-SFI (if such indication is supported or allowed),
- Opt-a: The symbol is regarded as Not available for configured DL/UL. The UE 200 does not perform configured DL reception or configured UL transmission in the symbol. The UE 200 can perform dynamically scheduled DL reception or dynamically scheduled UL transmission in the symbol.
- Opt-b: The symbol is regarded as available for DL/UL. The UE 200 can perform configured DL reception, dynamically scheduled DL reception, configured UL transmission, and dynamically scheduled UL transmission in the symbol.

When US-SFI is configured to be monitored based on a predetermined period, and the UE 200 does not detect DCI in a predetermined period,
- Alt-a: The UE 200 assumes that the semi-static F symbol may be used for one of UL transmission or DL reception.
- Alt-b: The UE 200 assumes that the semi-static F symbol is not available for either UL transmission or DL reception.
- Alt-c: The UE 200 follows the conventional SFI indication when configured to monitor the conventional SFI.

Regarding interaction between US-SFI indication and conventional SFI indication,
- Alt 1: The UE 200 does not expect to be configured to monitor group-common SFI via DCI format 2_0 at the same time when configured to monitor US-SFI.
- Alt 2: The UE 200 may be configured to monitor group-common SFI via DCI format 2_0 at the same time when configured to monitor US-SFI. In this case,
- Alt 2-1: The UE 200 always follows US-SFI and ignores group-common SFI via DCI format 2_0.
- Alt 2-2: US-SFI can override a symbol/slot indicated as F by group-common SFI via DCI format 2_0.
- For a symbol/slot indicated as F by group-common SFI via DCI format 2_0, if indicated as D(/U) by US-SFI, the UE 200 can perform DL reception (or UL transmission) in the symbol/slot.
- The UE 200 does not expect a symbol/slot indicated as U by group-common SFI via DCI format 2_0 to be indicated as D by US-SFI. Also, the UE 200 does not expect a symbol/slot indicated as D by group-common SFI via DCI format 2_0 to be indicated as U by US-SFI. Also, the UE 200 does not expect a symbol/slot indicated as D or U by group-common SFI via DCI format 2_0 to be indicated as F by US-SFI.

### (3.2.1.3) Option 3

The FD operation of the gNB 100 is non-transparent to the UE 200. That is, the UE 200 is aware that the gNB 100 operates in FD. Furthermore, as shown in Fig. 7, the UE 200 is also aware of resources in the time and/or frequency domain in the FD operation.

### (3.2.1.3.1) Option 3-1

In order to realize that the gNB 100 operates in FD (and HD), conventional NR TDD configuration information (TDD-Config-Common and/or TDD-Config-Dedicated) may be reused (further, dynamic SFI by DCI format 2_0 may be reused). Thereby, the operation of the UE 200 may be extended. For example, from the viewpoint of the gNB 100, an FD symbol/slot can be indicated by being configured as an F symbol/slot.

In Option 3-1, the FD operation of the gNB 100 is notified in advance via RRC/MAC CE/DCI or the like. Specifically, as described below, it is notified that an F slot/symbol is read as an FD symbol/slot. That is, the UE 200 can recognize that the gNB 100 is operating in FD by being notified to perform reading for this F slot/symbol. Alternatively, if the UE 200 reports via a UE capability report that reading of the F slot/symbol is possible, reading of the F slot/symbol may always be performed. Also in this case, the UE 200 may recognize that the gNB 100 is operating in FD.

When a new parameter "fullduplexmode" is configured via RRC or SIB, UE interpretation/operation based on existing signaling may be extended as follows.

### <Interpretation of semi-static TDD configuration>

- The UE 200 regards a symbol/slot configured as F as an FD symbol/slot. The UE 200 regards a symbol/slot configured as D/U as an HD symbol/slot.

### <Interpretation of dynamic SFI indication of D/U>

- Alt 1: The UE 200 regards a symbol/slot indicated as D/U by dynamic SFI as an HD D/U symbol/slot. Note that a semi-static FD F symbol/slot may be converted to an HD symbol/slot by dynamic SFI indicating D/U.
- Alt 2: The UE 200 regards a semi-static F symbol/slot indicated as D/U by dynamic SFI as an FD symbol/slot. In this case, the actual direction of the FD symbol/slot for the UE 200 is D/U indicated by dynamic SFI. Note that dynamic SFI indicating D/U for a semi-static FD symbol/slot is intended to indicate the actual direction of the FD symbol/slot instead of converting to an HD symbol/slot.

### <Interpretation of dynamic SFI indication of F>

- Alt-a: The UE 200 regards a symbol/slot indicated as F by dynamic SFI as an FD symbol/slot. In this case, the actual direction of the FD symbol/slot for the UE 200 may be determined/scheduled more flexibly.
- Alt-b: The UE 200 regards a symbol/slot indicated as F by dynamic SFI as an HD F symbol/slot. In this case, the actual direction of the FD symbol/slot for the UE 200 may be determined/scheduled more flexibly.
- Variation: Potential extension of UE 200 operation of Alt-a/Alt-b: The UE 200 may be able to perform configured UL transmission or configured DL reception in a symbol/slot indicated as F by dynamic SFI.

### <UE operation for semi-static F symbol/slot when SFI is configured but not monitored/detected/failed>

- Opt-1: Same operation as conventional
- Opt-2: Same operation as semi-static F symbol/slot when SFI is not configured. For example, similarly to <Interpretation of semi-static TDD configuration> described above, the UE 200 regards a symbol/slot configured as F as an FD symbol/slot, and regards a symbol/slot configured as D/U as an HD symbol/slot.

### <Variation>

- The number of switching/transition points from one of FD symbol/slot or HD symbol/slot to the other may be maximum X. X may be defined by standards or may be determined by UE capability information (UE capability).

### (3.2.1.3.2) Option 3-2

Additional/new semi-static signaling may be introduced. It may be supported that cell-common and/or UE-specific RRC configuration (e.g., may be referred to as FD-Config-Common and/or FD-Config-Dedicated) indicates a semi-static FD symbol/slot. Thereby, the operation of the UE 200 may be extended. Note that the UE-specific RRC configuration may be understood to correspond to the terminal-specific parameter described above.

Notification of the FD operation of the gNB 100 in Option 3-2 may be realized similarly to the notification of the FD operation of the gNB 100 in Option 2 described above.

### <Example 1>

A new cell-common or UE-specific RRC configuration may indicate FD or HD for a symbol/slot within each TDD configuration pattern period. In this case, the UE 200 needs to follow the conventional TDD configuration (TDD-Config-Common and/or TDD-Config-Dedicated) and the new FD configuration.
- The parameter "FD-Config-Common and/or FD-Config-Dedicated" may indicate FD or HD for each symbol/slot, or only for a symbol/slot configured/indicated as F by conventional TDD configuration/conventional TDD signaling (conventional TDD configuration + dynamic SFI).
- When the indication is for each symbol/slot, for a symbol/slot configured/indicated as D/U by conventional TDD configuration/conventional TDD signaling, the parameter "FD-Config-Common and/or FD-Config-Dedicated" may or may not be allowed/expected to indicate FD. Note that, when a symbol/slot is configured/indicated as D/U by conventional TDD configuration/conventional TDD signaling and indicated as FD by the parameter "FD-Config-Common and/or FD-Config-Dedicated", the UE 200 regards the symbol/slot as an FD symbol/slot, and regards the actual direction of the FD symbol/slot for the UE 200 as D/U according to the conventional TDD signaling. Alternatively, in this case, the UE 200 regards the symbol/slot as an HD D/U symbol/slot.
- When a symbol/slot is configured/indicated as F by conventional TDD configuration/conventional TDD signaling and indicated as FD by the parameter "FD-Config-Common and/or FD-Config-Dedicated", the UE 200 regards the symbol/slot as an FD symbol/slot, and the actual direction of the FD symbol/slot for the UE 200 is determined by other means, rules, or indications.

### <Example 2>

A new (UE-specific) RRC configuration may indicate FD or HD, and may indicate an actual direction of an FD symbol/slot as viewed from the UE 200 (the UE 200 does not have to follow the conventional TDD configuration).
- The parameter "FD-Config-Common and/or FD-Config-Dedicated" may indicate FD-D/FD-U(/FD-F) or HD (HD-D/HD-U/HD-F) for each symbol/slot, or only for a symbol/slot configured/indicated as F (and/or D/U) by conventional TDD signaling. Note that FD-D/FD-U/FD-F means an FD symbol/slot in which the actual direction as viewed from the UE 200 is D/U/F. Also, HD-D/HD-U/HD-F means an HD D/U/F symbol/slot.
- When the indication is for each symbol/slot, for a symbol/slot configured/indicated as D/U by conventional TDD configuration/conventional TDD signaling, the parameter "FD-Config-Common and/or FD-Config-Dedicated" may or may not be allowed/expected to indicate FD-D/FD-U(/FD-F) or HD (HD-D/HD-U/HD-F). Note that, when a symbol/slot is configured/indicated as D/U by conventional TDD configuration/conventional TDD signaling and indicated as FD-D/FD-U(/FD-F) by the parameter "FD-Config-Common and/or FD-Config-Dedicated", the UE 200 regards the symbol/slot as an FD symbol/slot, and regards the actual direction of the FD symbol/slot for the UE 200 as D/U(/F) according to the conventional TDD signaling. Alternatively, in this case, the UE 200 regards the symbol/slot as an HD D/U(/F) symbol/slot.

### (3.2.1.3.3) Option 3-3

Additional/new dynamic signaling may be used to realize FD (and HD) and extend the operation of the UE 200. It may be supported that cell-common and/or UE-specific dynamic signaling (e.g., DCI or MAC CE) dynamically indicates an FD symbol/slot. Note that the UE-specific dynamic signaling may be understood to correspond to the terminal-specific parameter described above.

Notification of the FD operation of the gNB 100 in Option 3-3 may be realized similarly to the notification of the FD operation of the gNB 100 in Option 2 described above.

### <Example 1>

A new cell-common or UE-specific dynamic indication (e.g., may be referred to as FDI) may indicate FD or HD for a symbol/slot. In this case, the UE 200 needs to follow the conventional TDD configuration and the new FD configuration.
- FDI may indicate FD or HD for each symbol/slot, or only for a semi-static FD symbol/slot. Note that the semi-static FD symbol/slot may be a symbol/slot configured/determined by a new RRC configuration such as Option 3-2, or may be a symbol/slot configured as F by the conventional TDD configuration.
- The UE 200 may or may not expect a semi-static HD symbol/slot to be converted to a dynamic FD symbol/slot by FDI.
- The UE 200 may or may not expect a semi-static FD symbol/slot to be converted to a dynamic HD symbol/slot by FDI.
- Variation: The UE 200 may or may not expect to be configured to monitor FDI and at the same time configured to monitor SFI via DCI format 2_0. If expected,
- Alt 1: FDI may be applied to semi-static FD symbols/slots, and SFI may be applied to semi-static HD symbols/slots.
- Alt 2: First, FDI is applied to determine the type of symbol/slot (FD symbol/slot or HD symbol/slot). Next, SFI is applied only to the determined HD symbol/slot.
- Alt 3: FDI is applied to determine the type of symbol/slot (FD symbol/slot or HD symbol/slot). For the determined FD symbol/slot, SFI is applied to determine the actual direction of the symbol/slot as viewed from the UE 200. For the HD symbol/slot, SFI is applied as conventional.

### <Example 2>

A new cell-common or UE-specific dynamic indication (e.g., may be referred to as FDI) may indicate FD or HD, and may indicate an actual direction of an FD symbol/slot as viewed from the UE 200 (the UE 200 does not have to follow the conventional TDD configuration).
- FDI may indicate FD-D/FD-U(/FD-F) or HD (HD-D/HD-U/HD-F) for each symbol/slot, or only for a semi-static FD symbol/slot. Note that FD-D/FD-U/FD-F means an FD symbol/slot in which the actual direction as viewed from the UE 200 is D/U/F. Also, HD-D/HD-U/HD-F means an HD D/U/F symbol/slot.
- The UE 200 may or may not expect a semi-static HD symbol/slot to be converted to a dynamic FD symbol/slot by FDI.
- The UE 200 may or may not expect a semi-static HD D/U symbol/slot to be converted to a dynamic FD-D/FD-U(/FD-F) symbol/slot by FDI.
- The UE 200 may or may not expect a semi-static HD F symbol/slot to be converted to a dynamic FD-D/FD-U(/FD-F) symbol/slot by FDI.
- The UE 200 may or may not expect a semi-static FD symbol/slot to be converted to a dynamic HD symbol/slot by FDI.
- The UE 200 may or may not expect a semi-static FD-D/FD-U symbol/slot to be converted to a dynamic HD D/U(/F) symbol/slot by FDI.
- The UE 200 may or may not expect a semi-static FD-F symbol/slot to be converted to a dynamic HD D/U(/F) symbol/slot by FDI.
- Variation: The UE 200 may or may not expect to be configured to monitor FDI and at the same time configured to monitor SFI via DCI format 2_0. If expected,
- Alt a: FDI may be applied to semi-static FD symbols/slots, and SFI may be applied to semi-static HD symbols/slots.
- Alt b: FDI is applied to determine the type of symbol/slot (FD symbol/slot or HD symbol/slot), and SFI is applied only to the determined HD symbol/slot.

### (3.2.1.3.4) Variation of Option 3

Option 3-2 and Option 3-3 may be combined.

### (3.2.1.4) Option 4

Option 3, where the UE 200 is aware of the FD symbol/slot and the HD symbol/slot, enables extension of transmission and reception of the UE 200 in the FD symbol/slot and/or the HD symbol/slot.
- Motivation for extending transmission and reception operation of the UE 200 in FD symbols/slots and/or HD symbols/slots will be described.
- In the case of transparent FD (where the UE 200 is not notified of the FD operation), there is a problem that the UE operation (e.g., DL reception and/or UL transmission) in the FD symbol/slot and/or the HD symbol/slot cannot be processed individually.
- Individual processing of the UE operation (e.g., DL reception and/or UL transmission) in the FD symbol/slot and/or the HD symbol/slot is beneficial in several cases. For example, considering the possibility that the gNB 100 separates transmission and reception for the FD operation, the reception panel/antenna of the gNB 100 may be different between the FD symbol/slot and the HD symbol/slot. For example, only half of the reception panel may be used for the FD symbol/slot.
- Extension of transmission and reception operation of the UE 200 will be described.
- DL reception or UL transmission in the FD symbol/slot and/or the HD symbol/slot is specially processed. For example, individual parameters (e.g., parameters related to space/power domain) are used for PUCCH/PUSCH/SRS in the FD symbol/slot and/or the HD symbol/slot.
- Regarding DL/UL channels/signals involving multiple repetitions, different numbers of repetitions may or may not be supported in different types of symbols/slots (e.g., the number of repetitions for FD symbols/slots and the number of repetitions for HD symbols/slots may be different).
- Regarding periodic/semi-persistent DL/UL channels/signals, transmission opportunities/reception opportunities of DL/UL channels/signals of different periods may or may not be supported in different types of symbols/slots (e.g., regarding this transmission opportunity/reception opportunity, the period of FD symbols/slots and the period of HD symbols/slots may be different).
- Transmission opportunities/reception opportunities of DL/UL channels/signals mapped to different types of symbols/slots may or may not be supported.
- Variation: The number of switching/transition points from one of FD symbol/slot or HD symbol/slot to the other in a predetermined period (e.g., one TDD period, one slot period) may be maximum X. X may be defined by standards or may be determined by UE capability information (UE capability).
- Variation: A guard period for switching between an FD symbol/slot and an HD symbol/slot may be defined by standards, indicated by the gNB 100, or determined based on UE capability information (UE capability).

### (3.2.2) Operation Example 2

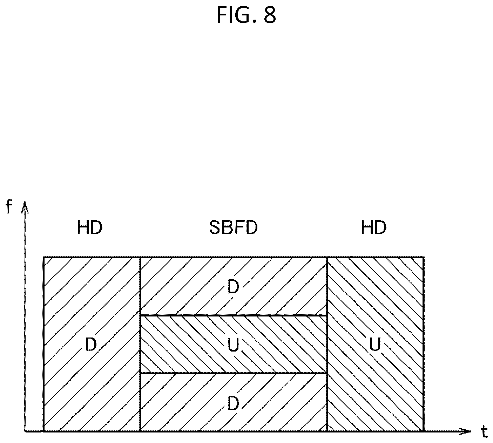

Operation example 2 will be described with reference to Figs. 8 and 9. In operation example 2, the gNB 100 can operate in combination of FD (and HD) described in the operation example and SBFD described below.

Fig. 8 is a diagram showing an example of an SBFD symbol/slot. An SBFD symbol/slot may be understood as a symbol/slot configured/indicated to have a UL (and DL) subband for the gNB 100 to operate in SBFD. That is, as shown in Fig. 9, an SBFD symbol/slot may be understood as a DL symbol/slot in TDD in which a part of the band of the DL symbol/slot is configured/indicated as a UL subband.

As shown in Fig. 8, DL or UL is allocated to each subband constituting the SBFD symbol/slot. Hereinafter, a subband to which DL is allocated is also referred to as a DL subband, and a subband to which UL is allocated is also referred to as a UL subband. Note that, in Figs. 8 and 9, symbols/slots or subbands marked with "D" are DL symbols/slots or DL subbands, and symbols/slots or subbands marked with "U" are UL symbols/slots or UL subbands.

### (3.2.2.1) Option 1

The FD operation of the gNB 100 and the subband position of SBFD are transparent to the UE 200. That is, the UE 200 is not aware that the gNB 100 operates in FD, nor is it aware of the subband position of SBFD.

### (3.2.2.2) Option 2

The FD operation of the gNB 100 is transparent to the UE 200. On the other hand, the subband position of SBFD is non-transparent to the UE 200. That is, the UE 200 is not aware that the gNB 100 operates in FD, but is aware of the subband position in the SBFD symbol/slot.

### (3.2.2.3) Option 3

The FD operation of the gNB 100 is non-transparent to the UE 200. On the other hand, resources in the time and/or frequency domain in the FD operation and the subband position of SBFD are transparent to the UE 200. That is, the UE 200 is aware that the gNB 100 operates in FD, but is not aware of resources in the time and/or frequency domain in the FD operation. Also, the UE 200 is not aware of the subband position of SBFD.

Therefore, in Option 3, the operation in Option 2 of Operation Example 1 can be diverted.

### (3.2.2.4) Option 4

The FD operation of the gNB 100 and the subband position of SBFD are non-transparent to the UE 200. On the other hand, resources in the time and/or frequency domain in the FD operation are transparent to the UE 200. That is, the UE 200 is aware that the gNB 100 operates in FD and the subband position of SBFD, but is not aware of resources in the time and/or frequency domain in the FD operation.

Therefore, in Option 4, based on the operation in Option 2 of Operation Example 1, the operation may be performed as shown below regarding signaling indicating the subband position of SBFD. Accordingly, the operation of the UE 200 may be extended. Note that the signaling indicating the subband position of SBFD may be specified in Release 19 and later. Also, the subband position of SBFD may be configured by RRC signaling. In this case, the subband position may be indicated by a start frequency and an end frequency, a center frequency and a bandwidth, or the like. Also, the frequency of the subband may be configured with a granularity (unit) such as subcarrier/resource block (RB)/resource block group (RBG)/subband (in the sense of a plurality of subbands constituting a wideband). Furthermore, it may be activated/deactivated via MAC CE/DCI or the like.

### (3.2.2.4.1) Option 4-1

Conventional NR TDD configuration information (TDD-Config-Common and/or TDD-Config-Dedicated) and dynamic SFI by DCI format 2_0 may be used.

From the viewpoint of the gNB 100, an FD symbol/slot may be indicated by configuring a symbol/slot that is not an SBFD symbol/slot (hereinafter also referred to as a non-SBFD symbol/slot) as an F symbol/slot, that is, as a non-SBFD F symbol/slot. From the viewpoint of the UE 200, SFI may indicate an actual direction (DL/UL) as viewed from the UE 200 in this non-SBFD F symbol/slot (that is, a non-SBFD symbol/slot as viewed from the gNB 100, which is an FD symbol/slot). In such a situation, the UE 200 may operate as follows.

First, for non-SBFD symbols/slots, the operation of Option 2 of Operation Example 1 may be diverted.

Next, for SBFD symbols/slots, the operation may be as follows.
- When indicated as D(/U) by SFI,
- Alt-a1: The UE 200 may regard the symbol/slot as an SBFD symbol/slot having a DL (or UL) subband that is actually used. The UE 200 may perform DL reception in the DL subband in the symbol/slot (or may perform UL transmission in the UL subband).

- Alt-a2: The UE 200 may regard the symbol/slot as a non-SBFD DL (or UL) symbol/slot and use the entire DL BWP (or UL BWP). The UE 200 may perform DL reception in the DL BWP in the symbol/slot (or may perform UL transmission in the UL BWP).
- Alt-a3: The UE 200 may not expect an SBFD symbol/slot to be indicated as D(/U) by SFI.
- When indicated as F by SFI,
- Alt-b1: The UE 200 may regard the symbol/slot as an SBFD symbol/slot. The UE 200 may operate in the same manner as for a conventional SBFD symbol/slot.
- Alt-b2: The UE 200 may regard the symbol/slot as a non-SBFD F symbol/slot. The UE 200 may perform scheduled or configured DL reception in the DL BWP in the symbol/slot, or may perform scheduled or configured UL transmission in the UL BWP in the symbol/slot.
- Alt-b3: The UE 200 may not expect an SBFD symbol/slot to be indicated as F by SFI.
- Alt-b4: The UE 200 may regard the symbol/slot as a NOT available (NA) symbol/slot as configured DL or UL. The UE 200 may not perform configured DL reception or configured UL transmission in the symbol/slot. The UE 200 may perform dynamically scheduled DL reception or dynamically scheduled UL transmission in the symbol/slot.

### (3.2.2.4.2) Option 4-2

Conventional NR TDD configuration information (TDD-Config-Common and/or TDD-Config-Dedicated) may be used (further, dynamic SFI by DCI format 2_0 may be used). In addition, an additional/new UE-specific signal may be used.

The motivation for introducing the additional/new UE-specific signal is the same as in Option 2 of Operation Example 1, and the additional/new UE-specific signal may be the same as that in Option 2 of Operation Example 1. Therefore, the additional/new UE-specific signal may be referred to as, for example, US-SFI. Considering the configuration/indication of US-SFI and the subband position of SBFD, the UE 200 may operate as follows.

First, for non-SBFD symbols/slots, the operation of Option 2 of Operation Example 1 may be diverted.

Next, for SBFD symbols/slots, the operation may be as follows.
- When indicated as D(/U) by US-SFI,
- Alt-a1: The UE 200 may regard the symbol/slot as an SBFD symbol/slot having a DL (or UL) subband that is actually used. The UE 200 may perform DL reception in the DL subband in the symbol/slot (or may perform UL transmission in the UL subband).

- Alt-a2: The UE 200 may regard the symbol/slot as a non-SBFD DL (or UL) symbol/slot and use the entire DL BWP (or UL BWP). The UE 200 may perform DL reception in the DL BWP in the symbol/slot (or may perform UL transmission in the UL BWP).
- Alt-a3: The UE 200 may not expect an SBFD symbol/slot to be indicated as D(/U) by US-SFI.
- When indicated as F by US-SFI,
- Alt-b1: The UE 200 may regard the symbol/slot as an SBFD symbol/slot. The UE 200 may operate in the same manner as for a conventional SBFD symbol/slot.
- Alt-b2: The UE 200 may regard the symbol/slot as a non-SBFD F symbol/slot. The UE 200 may perform scheduled or configured DL reception in the DL BWP in the symbol/slot, or may perform scheduled or configured UL transmission in the UL BWP in the symbol/slot.
- Alt-b3: The UE 200 may not expect an SBFD symbol/slot to be indicated as F by US-SFI.
- Alt-b4: The UE 200 may regard the symbol/slot as a NOT available (NA) symbol/slot as configured DL or UL. The UE 200 may not perform configured DL reception or configured UL transmission in the symbol/slot. The UE 200 may perform dynamically scheduled DL reception or dynamically scheduled UL transmission in the symbol/slot.

### (3.2.2.5) Option 5

The FD operation of the gNB 100 and resources in the time and/or frequency domain in the FD operation are non-transparent to the UE 200. On the other hand, the subband position of SBFD is transparent to the UE 200. That is, the UE 200 is aware that the gNB 100 operates in FD and resources in the time and/or frequency domain in the FD operation, but is not aware of the subband position of SBFD.

Therefore, in Option 5, the operation in Option 3 (Option 3-1/3-2/3-3) of Operation Example 1 and the operation in Option 4 according to Option 3 of Operation Example 1 can be diverted.

### (3.2.2.6) Option 6

The FD operation of the gNB 100 and resources in the time and/or frequency domain in the FD operation are non-transparent to the UE 200. Furthermore, as shown in Fig. 9, the subband position of SBFD is also non-transparent to the UE 200. That is, the UE 200 is aware that the gNB 100 operates in FD, resources in the time and/or frequency domain in the FD operation, and the subband position of SBFD. Note that Fig. 9, similarly to Fig. 7, shows a state where the gNB 100 regards Flexible (F) symbols/slots as FD symbols/slots, and the UE 200 (UE#1, UE#2, UE#3, UE#4 in the figure) regards them as HD symbols/slots.

Therefore, in Option 6, based on the operation in Option 3 of Operation Example 1, the operation may be performed as shown below regarding signaling indicating the subband position of SBFD. Accordingly, the operation of the UE 200 may be extended. Note that the signaling indicating the subband position of SBFD may be specified in Release 19 and later. Also, the subband position of SBFD may be configured by RRC signaling. In this case, the subband position may be indicated by a start frequency and an end frequency, a center frequency and a bandwidth, or the like. Also, the frequency of the subband may be configured with a granularity (unit) such as subcarrier/resource block (RB)/resource block group (RBG)/subband (in the sense of a plurality of subbands constituting a wideband). Furthermore, it may be activated/deactivated via MAC CE/DCI or the like.

### (3.2.2.6.1) Option 6-1

Conventional NR TDD configuration information (TDD-Config-Common and/or TDD-Config-Dedicated) may be used (further, dynamic SFI by DCI format 2_0 may be used).

From the viewpoint of the gNB 100, an FD symbol/slot may be indicated by being configured as an F symbol/slot. UE interpretation/operation based on existing signaling may be extended as follows.

### <Interpretation of semi-static TDD configuration and SBFD subband position signaling>

- The UE 200 regards a symbol/slot in which a UL (and DL) subband is configured/indicated in SBFD operation as an SBFD symbol/slot.
- The UE 200 regards a symbol/slot in which a UL (and DL) subband is not configured/indicated in SBFD operation (that is, a non-SBFD symbol/slot) and which is configured as F as an FD symbol/slot. Also, the UE 200 regards a non-SBFD symbol/slot configured as D/U as an HD symbol/slot.

### <Interpretation of dynamic SFI indication of D/U>

### (When the target of dynamic SFI indication is a non-SBFD symbol/slot)

- The operation of Option 3-1 of Operation Example 1 can be diverted.

### (When the target of dynamic SFI indication is an SBFD symbol/slot)

- Alt-a1: The UE 200 may regard the symbol/slot as an SBFD symbol/slot having a DL (or UL) subband that is actually used. The UE 200 may perform DL reception in the DL subband in the symbol/slot (or may perform UL transmission in the UL subband).
- Alt-a2: The UE 200 may regard the symbol/slot as a non-SBFD HD DL (or UL) symbol/slot and use the entire DL BWP (or UL BWP).
- Alt-a3: The UE 200 may regard the symbol/slot as a non-SBFD FD DL (or UL) symbol/slot and use the entire DL BWP (or UL BWP).
- Alt-a4: The UE 200 may not expect an SBFD symbol/slot to be indicated as D(/U) by SFI.

### <Interpretation of dynamic SFI indication of F>

### (When the target of dynamic SFI indication is a non-SBFD symbol/slot)

- The operation of Option 3-1 of Operation Example 1 can be diverted.

### (When the target of dynamic SFI indication is an SBFD symbol/slot)

- Alt-b1: The UE 200 may regard the symbol/slot as an SBFD symbol/slot (that is, may perform DL reception in the DL subband or UL transmission in the UL subband). In this case, which of the DL subband and the UL subband is actually used may be determined or scheduled more flexibly.
- Alt-b2: The UE 200 regards a symbol/slot indicated as F by dynamic SFI as a non-SBFD FD symbol/slot. In this case, the actual direction of the FD symbol/slot may be determined/scheduled more flexibly.
- Alt-b3: The UE 200 regards a symbol/slot indicated as F by dynamic SFI as a non-SBFD HD symbol/slot. In this case, the actual direction of the HD symbol/slot may be determined/scheduled more flexibly.
- Variation: The UE 200 may be able to perform configured UL transmission or configured DL reception in the symbol/slot.

### (3.2.2.6.2) Option 6-2

Conventional NR TDD configuration information (TDD-Config-Common and/or TDD-Config-Dedicated) and/or dynamic SFI by DCI format 2_0 may be used. In addition, additional/new semi-static signaling may be used.

Similarly to Option 3-2 of Operation Example 1, a new cell-common and/or UE-specific RRC configuration (e.g., may be referred to as FD-Config-Common and/or FD-Config-Dedicated) for indicating a semi-static FD symbol/slot may be used.

The UE 200 may not expect that a UL subband is configured by SBFD configuration and at the same time an FD symbol/slot is configured by the above-described additional/new semi-static signaling for a symbol/slot.

For non-SBFD symbols/slots, the UE interpretation/operation described in Option 3-2 of Operation Example 1 may be diverted, and for SBFD symbols/slots, the SBFD operation specified in Release 19 and later may be diverted. Also, for SBFD symbols/slots, the following SBFD operation may be performed.

For an SBFD symbol/slot in which a UL subband is configured in a DL symbol/slot, the UE 200 performs a transmission operation when a resource is configured for the UL subband, and performs a reception operation when a resource is configured for the DL (DL subband). Also, when different parameters (e.g., transmission power) are configured for a non-SBFD symbol/slot and an SBFD symbol/slot, the UE 200 uses the parameter configured for the SBFD symbol/slot.

### (3.2.2.6.3) Option 6-3

Conventional NR TDD configuration information (TDD-Config-Common and/or TDD-Config-Dedicated) and/or dynamic SFI by DCI format 2_0 may be used. In addition, additional/new dynamic signaling may be used to realize FD (and HD).

Similarly to Option 3-3 of Operation Example 1, cell-common and/or UE-specific dynamic signaling (e.g., DCI or MAC CE) for dynamically indicating an FD symbol/slot may be used.

First, for non-SBFD symbols/slots, the UE interpretation/operation described in Option 3-3 of Operation Example 1 may be diverted.

Next, for SBFD symbols/slots, a new cell-common or UE-specific dynamic indication (e.g., may be referred to as FDI) may indicate FD or HD (or SBFD) for a symbol/slot. Also, FDI may indicate FD or HD (or SBFD) for each (non-SBFD) symbol/slot, or only for a semi-static FD symbol/slot. In this case, the symbol/slot indicated by FDI is:
- Always an SBFD symbol/slot. The UE 200 may ignore the FDI indication for the symbol/slot.
- Always an SBFD symbol/slot. The UE 200 may not expect FDI to indicate FD or HD for an SBFD symbol/slot.
- Based on the FDI indication, an SBFD symbol/slot may be converted to an FD symbol/slot or an HD symbol/slot.

### (3.2.2.6.4) Variation of Option 6

Option 6-2 and Option 6-3 may be combined.

In Option 6, when the UE 200 is aware of the FD symbol/slot, the HD symbol/slot, and the SBFD symbol/slot, transmission and reception of the UE 200 in the FD symbol/slot and/or the HD symbol/slot and/or the SBFD symbol/slot can be extended as follows.

- DL reception or UL transmission in the FD symbol/slot and/or the HD symbol/slot and/or the SBFD symbol/slot is specially processed. For example, individual parameters (e.g., parameters related to space/power domain) are used for PUCCH/PUSCH/SRS in the FD symbol/slot and/or the HD symbol/slot and/or the SBFD symbol/slot.
- Regarding DL/UL channels/signals involving multiple repetitions, different numbers of repetitions may or may not be supported in different types of symbols/slots (e.g., the number of repetitions for FD symbols/slots, the number of repetitions for HD symbols/slots, and the number of repetitions for SBFD symbols/slots may be different. Note that all of these numbers of repetitions may be different from each other, or some of them may be different from each other. For example, the number of repetitions for FD symbols/slots and the number of repetitions for HD symbols/slots may be the same, and this number of repetitions and the number of repetitions for SBFD symbols/slots may be different.).
- Regarding periodic/semi-persistent DL/UL channels/signals, transmission opportunities/reception opportunities of DL/UL channels/signals of different periods may or may not be supported in different types of symbols/slots (e.g., regarding this transmission opportunity/reception opportunity, the period of FD symbols/slots, the period of HD symbols/slots, and the period of SBFD symbols/slots may be different. Note that all of these periods may be different from each other, or some of them may be different from each other. For example, the period of FD symbols/slots and the period of HD symbols/slots may be the same, and this period and the period of SBFD symbols/slots may be different.).
- Transmission opportunities/reception opportunities of DL/UL channels/signals mapped to different types of symbols/slots may or may not be supported.

### (3.2.2.7) Variation of Operation Example 2

In Operation Example 2 described above, the gNB 100 may reserve resources to which SBFD is applied (e.g., SBFD symbols/slots) in order to reduce interference with important channels/signals.

### (3.2.3) UE Capability Information

Regarding the operation examples described above, the following UE capability information (UE capability) may be defined. The UE capability may be reported by the UE 200.
- UE capability about knowing (awareness) that gNB 100 operates in FD
- UE capability about knowing (awareness) time and/or frequency resources when gNB 100 operates in FD
- UE capability about knowing (awareness) that gNB 100 operates in FD and subband position of SBFD
- UE capability about knowing (awareness) time and/or frequency resources when gNB 100 operates in FD and subband position of SBFD
- UE capability about whether or not to support configured DL reception or configured UL transmission in symbol/slot indicated as F by SFI
- UE capability about whether or not to support new cell-common/UE-specific RRC configuration for gNB 100 to indicate FD
- UE capability about whether or not to support new cell-common/UE-specific dynamic signaling for gNB 100 to indicate FD

### (4) Function and Effects

According to the above-described embodiment, it is possible to realize flexible resource allocation by FD when notifying a terminal that the base station operates in FD.

### (5) Other Embodiments

Although the contents of the present invention have been described by way of the embodiments, it is obvious to those skilled in the art that the present invention is not limited to what is written here and that various modifications and improvements thereof are possible.

The above-described operation examples may be combined and applied in a composite manner as long as no inconsistency arises.

Note that the block diagrams used in the description of the above embodiments show blocks of functional units. Those functional blocks (structural components) can be realized by a desired combination of at least one of hardware and software. Means for realizing each functional block is not particularly limited. That is, each functional block may be realized by one device combined physically or logically, or by two or more devices separated physically or logically that are directly or indirectly connected (e.g., wired, wireless, etc.). The functional block may be realized by combining the one device or the plurality of devices with software.

Functions include, but are not limited to, judging, determining, deciding, calculating, computing, processing, deriving, investigating, searching, confirming, receiving, transmitting, outputting, accessing, resolving, selecting, choosing, establishing, comparing, assuming, expecting, regarding, broadcasting, notifying, communicating, forwarding, configuring, reconfiguring, allocating, mapping, assigning, and the like. For example, a functional block (component) that functions transmission is referred to as a transmitting unit or a transmitter. In any case, as described above, the realization method is not particularly limited.

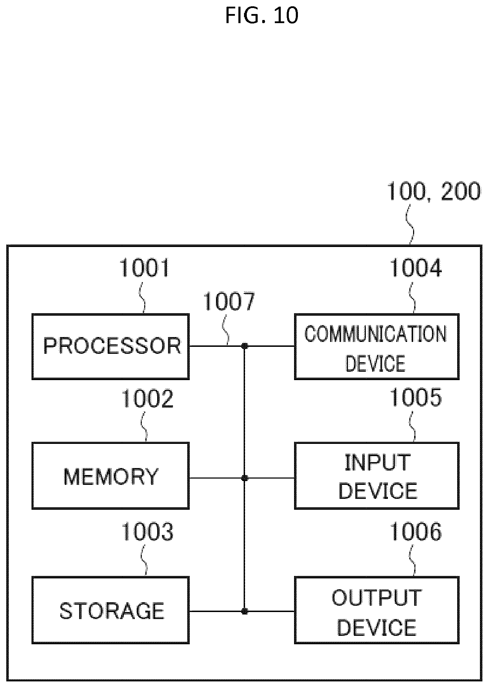

For example, the base station 100, the terminal 200, and the like in one embodiment of the present disclosure may function as a computer that performs processing of the radio communication method of the present disclosure. Fig. 10 is a diagram showing an example of a hardware configuration of the base station 100 and the terminal 200 according to one embodiment of the present disclosure. The base station 100 and the terminal 200 described above may be physically configured as a computer device including a processor 1001, a memory 1002, a storage 1003, a communication device 1004, an input device 1005, an output device 1006, a bus 1007, and the like.

Note that, in the following description, the term "device" can be read as a circuit, a device, a unit, or the like. The hardware configuration of the base station 100 and the terminal 200 may be configured to include one or a plurality of the devices shown in the figure, or may be configured without including some of the devices.

Each function in the base station 100 and the terminal 200 is realized by reading predetermined software (program) onto hardware such as the processor 1001 and the memory 1002, and by the processor 1001 performing arithmetic operations to control communication by the communication device 1004 and control at least one of reading and writing of data in the memory 1002 and the storage 1003.

The processor 1001 controls the entire computer by operating an operating system, for example. The processor 1001 may be configured by a Central Processing Unit (CPU) including an interface with peripheral devices, a control device, an arithmetic device, a register, and the like.

Also, the processor 1001 reads a program (program code), a software module, data, and the like from at least one of the storage 1003 and the communication device 1004 into the memory 1002, and executes various processes according to them. As the program, a program that causes a computer to execute at least a part of the operations described in the above embodiments is used. Furthermore, although it has been described that the various processes described above are executed by one processor 1001, they may be executed simultaneously or sequentially by two or more processors 1001. The processor 1001 may be implemented by one or more chips. Note that the program may be transmitted from a network via a telecommunication line.

The memory 1002 is a computer-readable recording medium, and may be configured by at least one of, for example, a Read Only Memory (ROM), an Erasable Programmable ROM (EPROM), an Electrically Erasable Programmable ROM (EEPROM), and a Random Access Memory (RAM). The memory 1002 may be referred to as a register, a cache, a main memory (main storage device), or the like. The memory 1002 can store executable programs (program codes), software modules, and the like for implementing the radio communication method according to one embodiment of the present disclosure.

The storage 1003 is a computer-readable recording medium, and may be configured by at least one of, for example, an optical disk such as a Compact Disc ROM (CD-ROM), a hard disk drive, a flexible disk, a magneto-optical disk (e.g., a compact disk, a digital versatile disk, a Blu-ray (registered trademark) disk), a smart card, a flash memory (e.g., a card, a stick, a key drive), a floppy (registered trademark) disk, a magnetic strip, and the like. The storage 1003 may be referred to as an auxiliary storage device. The above-described storage medium may be, for example, a database, a server, or other appropriate media including at least one of the memory 1002 and the storage 1003.

The communication device 1004 is hardware (transmission/reception device) for performing communication between computers via at least one of a wired network and a wireless network, and is also referred to as, for example, a network device, a network controller, a network card, a communication module, or the like. The communication device 1004 may be configured to include, for example, a high-frequency switch, a duplexer, a filter, a frequency synthesizer, and the like, in order to realize at least one of Frequency Division Duplex (FDD) and Time Division Duplex (TDD).

The input device 1005 is an input device (e.g., a keyboard, a mouse, a microphone, a switch, a button, a sensor, etc.) that accepts input from the outside. The output device 1006 is an output device (e.g., a display, a speaker, an LED lamp, etc.) that implements output to the outside. Note that the input device 1005 and the output device 1006 may be an integrated configuration (e.g., a touch panel).

Also, each device such as the processor 1001 and the memory 1002 is connected by a bus 1007 for communicating information. The bus 1007 may be configured using a single bus, or may be configured using different buses between devices.

Also, the base station 100 and the terminal 200 may be configured to include hardware such as a microprocessor, a Digital Signal Processor (DSP), an Application Specific Integrated Circuit (ASIC), a Programmable Logic Device (PLD), and a Field Programmable Gate Array (FPGA), and some or all of the functional blocks may be realized by the hardware. For example, the processor 1001 may be implemented using at least one of these hardwares.

Notification of information is not limited to the aspects/embodiments described in the present disclosure, and may be performed using other methods. For example, notification of information may be implemented by physical layer signaling (e.g., Downlink Control Information (DCI), Uplink Control Information (UCI)), upper layer signaling (e.g., Radio Resource Control (RRC) signaling, Medium Access Control (MAC) signaling), broadcast information (Master Information Block (MIB), System Information Block (SIB)), other signals, or a combination thereof. Also, RRC signaling may be referred to as an RRC message, and may be, for example, an RRC Connection Setup message, an RRC Connection Reconfiguration message, or the like.

Each aspect/embodiment described in the present disclosure may be applied to a system using Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), New radio access (NX), Future generation radio access (FX), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and at least one of next generation systems extended, modified, created, or specified based on these. Also, a plurality of systems may be combined (e.g., a combination of at least one of LTE and LTE-A and 5G, etc.) and applied.

The processing procedures, sequences, flowcharts, and the like of each aspect/embodiment described in the present disclosure may be reordered as long as there is no contradiction. For example, regarding the methods described in the present disclosure, elements of various steps are presented using an exemplary order, and are not limited to the specific order presented.

The specific operation performed by the base station in the present disclosure may be performed by its upper node in some cases. In a network consisting of one or a plurality of network nodes having a base station, it is obvious that various operations performed for communication with a terminal can be performed by at least one of the base station and other network nodes other than the base station (e.g., MME or S-GW is conceivable, but not limited thereto). Although the case where there is one other network node other than the base station has been illustrated above, it may be a combination of a plurality of other network nodes (e.g., MME and S-GW).

Information, signals (information, etc.) can be output from an upper layer (or a lower layer) to a lower layer (or an upper layer). They may be input and output via a plurality of network nodes.

Input and output information, etc. may be stored in a specific location (e.g., a memory) or may be managed using a management table. Input and output information, etc. can be overwritten, updated, or appended. Output information, etc. may be deleted. Input information, etc. may be transmitted to other devices.

Determination may be performed by a value represented by 1 bit (0 or 1), may be performed by a Boolean value (Boolean: true or false), or may be performed by comparison of numerical values (e.g., comparison with a predetermined value).

Each aspect/embodiment described in the present disclosure may be used alone, may be used in combination, or may be switched and used in accordance with execution. Also, notification of predetermined information (e.g., notification of "being X") is not limited to being performed explicitly, and may be performed implicitly (e.g., not notifying the predetermined information).

Software should be broadly interpreted to mean instructions, instruction sets, codes, code segments, program codes, programs, subprograms, software modules, applications, software applications, software packages, routines, subroutines, objects, executable files, execution threads, procedures, functions, and the like, regardless of whether it is referred to as software, firmware, middleware, microcode, hardware description language, or by other names.

Also, software, instructions, information, and the like may be transmitted and received via a transmission medium. For example, when software is transmitted from a website, a server, or other remote sources using at least one of wired technology (coaxial cable, optical fiber cable, twisted pair, Digital Subscriber Line (DSL), etc.) and wireless technology (infrared, microwave, etc.), at least one of these wired technology and wireless technology is included within the definition of the transmission medium.

Information, signals, and the like described in the present disclosure may be represented using any of a variety of different technologies. For example, data, instructions, commands, information, signals, bits, symbols, chips, and the like that may be mentioned throughout the above description may be represented by voltages, currents, electromagnetic waves, magnetic fields or magnetic particles, optical fields or photons, or any combination thereof.

Note that terms described in the present disclosure and terms necessary for understanding the present disclosure may be replaced with terms having the same or similar meanings. For example, at least one of a channel and a symbol may be a signal (signaling). Also, a signal may be a message. Also, a component carrier (CC) may be referred to as a carrier frequency, a cell, a frequency carrier, or the like.

The terms "system" and "network" used in the present disclosure are used interchangeably.

Also, information, parameters, and the like described in the present disclosure may be represented using absolute values, may be represented using relative values from predetermined values, or may be represented using corresponding other information. For example, radio resources may be indicated by an index.

The names used for the parameters described above are not limiting names in any respect. Furthermore, mathematical formulas and the like using these parameters may differ from those explicitly disclosed in the present disclosure. Since various channels (e.g., PUCCH, PDCCH, etc.) and information elements can be identified by any suitable names, various names assigned to these various channels and information elements are not limiting names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. A base station may be referred to by terms such as a macro cell, a small cell, a femto cell, and a pico cell.

A base station can accommodate one or a plurality of (e.g., three) cells (also referred to as sectors). When a base station accommodates a plurality of cells, the entire coverage area of the base station can be divided into a plurality of smaller areas, and each smaller area can also provide communication services by a base station subsystem (e.g., a compact base station for indoor use (Remote Radio Head, RRH)). The term "cell" or "sector" refers to a part or the whole of the coverage area of at least one of the base station and the base station subsystem that performs communication services in this coverage.

In the present disclosure, a base station transmitting information to a terminal may be read as the base station indicating control/operation based on the information to the terminal.

In the present disclosure, terms such as "terminal", "user terminal", "Mobile Station (MS)", and "User Equipment (UE)" can be used interchangeably.

A mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmission device, a reception device, a communication device, or the like. Note that at least one of the base station and the mobile station may be a device mounted on a mobile body, the mobile body itself, or the like. The mobile body refers to a movable object, and the moving speed is arbitrary. It also naturally includes cases where the mobile body is stopped. The mobile body includes, for example, a vehicle, a transport vehicle, an automobile, a motorcycle, a bicycle, a connected car, an excavator, a bulldozer, a wheel loader, a dump truck, a forklift, a train, a bus, a rear car, a rickshaw, a ship and other watercraft, an airplane, a rocket, an artificial satellite, a drone (registered trademark), a multicopter, a quadcopter, a balloon, and objects mounted on these, and is not limited thereto. Also, the mobile body may be a mobile body that runs autonomously based on an operation command. It may be a vehicle (e.g., a car, an airplane, etc.), may be an unmanned mobile body (e.g., a drone, an autonomous driving car, etc.), or may be a robot (manned type or unmanned type). Note that at least one of the base station and the mobile station includes a device that does not necessarily move during communication operation. For example, at least one of the base station and the mobile station may be an Internet of Things (IoT) device such as a sensor.

Also, the base station in the present disclosure may be read as a terminal. For example, each aspect/embodiment of the present disclosure may be applied to a configuration in which communication between a base station and a terminal is replaced with communication between a plurality of terminals (e.g., may be referred to as Device-to-Device (D2D), Vehicle-to-Everything (V2X), etc.). In this case, the terminal 200 may have the functions of the base station 100 described above. Also, terms such as "uplink" and "downlink" may be read as terms corresponding to inter-terminal communication (e.g., "side"). For example, an uplink channel, a downlink channel, and the like may be read as a side channel.

Similarly, the terminal in the present disclosure may be read as a base station. In this case, the base station 100 may have the functions of the terminal 200 described above.

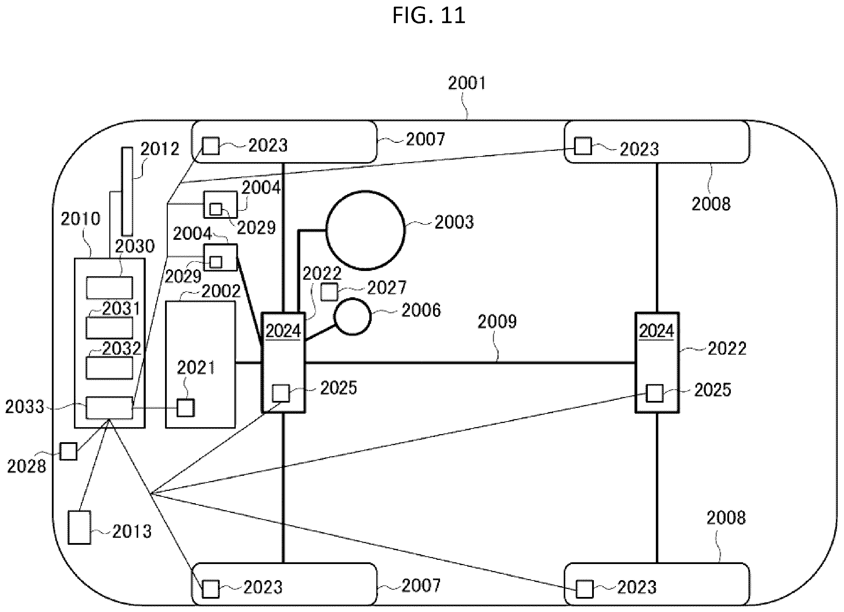

Fig. 11 shows a configuration example of a vehicle 2001. As shown in Fig. 11, the vehicle 2001 comprises a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is composed of, for example, an engine, a motor, or a hybrid of an engine and a motor.

The steering unit 2003 includes at least a steering wheel (also called a handle), and is configured to steer at least one of the front wheels and the rear wheels based on the operation of the steering wheel operated by a user.

The electronic control unit 2010 is composed of a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be called an Electronic Control Unit (ECU).

Signals from various sensors 2021 to 2029 include a current signal from a current sensor 2021 that senses a current of a motor, a rotation speed signal of front wheels or rear wheels obtained by a rotation speed sensor 2022, an air pressure signal of front wheels or rear wheels obtained by an air pressure sensor 2023, a vehicle speed signal obtained by a vehicle speed sensor 2024, an acceleration signal obtained by an acceleration sensor 2025, a depression amount signal of an accelerator pedal obtained by an accelerator pedal sensor 2029, a depression amount signal of a brake pedal obtained by a brake pedal sensor 2026, an operation signal of a shift lever obtained by a shift lever sensor 2027, a detection signal for detecting an obstacle, a vehicle, a pedestrian, or the like obtained by an object detection sensor 2028, and the like.

The information service unit 2012 is composed of various devices for providing (outputting) various information such as driving information, traffic information, and entertainment information, such as a car navigation system, an audio system, a speaker, a television, and a radio, and one or more ECUs controlling these devices. The information service unit 2012 provides various multimedia information and multimedia services to occupants of the vehicle 2001 using information obtained from an external device via the communication module 2013 or the like.

The information service unit 2012 may include an input device (e.g., a keyboard, a mouse, a microphone, a switch, a button, a sensor, a touch panel, etc.) that accepts input from the outside, or may include an output device (e.g., a display, a speaker, an LED lamp, a touch panel, etc.) that implements output to the outside.

The driving assistance system unit 2030 is composed of various devices for providing functions for preventing accidents in advance or reducing the driving load of a driver, such as a millimeter wave radar, Light Detection and Ranging (LiDAR), a camera, a positioning locator (e.g., GNSS, etc.), map information (e.g., High Definition (HD) map, Autonomous Vehicle (AV) map, etc.), a gyro system (e.g., Inertial Measurement Unit (IMU), Inertial Navigation System (INS), etc.), an Artificial Intelligence (AI) chip, and an AI processor, and one or more ECUs controlling these devices. Also, the driving assistance system unit 2030 transmits and receives various information via the communication module 2013 to realize a driving support function or an autonomous driving function.

The communication module 2013 can communicate with the microprocessor 2031 and components of the vehicle 2001 via a communication port. For example, the communication module 2013 transmits and receives data to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2029 provided in the vehicle 2001 via the communication port 2033.

The communication module 2013 is a communication device capable of being controlled by the microprocessor 2031 of the electronic control unit 2010 and communicating with an external device. For example, it transmits and receives various information to and from an external device via wireless communication. The communication module 2013 may be inside or outside the electronic control unit 2010. The external device may be, for example, a base station, a mobile station, or the like.

The communication module 2013 may transmit at least one of signals from the various sensors 2021 to 2029 described above input to the electronic control unit 2010, information obtained based on the signals, and information based on input from the outside (user) obtained via the information service unit 2012 to an external device via wireless communication. The electronic control unit 2010, various sensors 2021 to 2029, the information service unit 2012, and the like may be referred to as an input unit that accepts input. For example, PUSCH transmitted by the communication module 2013 may include information based on the input.

The communication module 2013 receives various kinds of information (traffic information, signal information, Inter-vehicular distance information, etc.) transmitted from an external device and displays them to the information service unit 2012 provided in the vehicle. The information service unit 2012 may be called an (For example, information is output to devices such as displays and speakers based on the PDSCH (or data/information decoded from the PDSCH) received by the communication module 2013) output section that outputs information.

The communication module 2013 also stores various information received from external devices in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2029, and the like provided in the vehicle 2001.

Terms "determining" and "deciding" used in the present disclosure may encompass a wide variety of operations. "Determining" and "deciding" may include, for example, regarding judging, calculating, computing, processing, deriving, investigating, looking up, search, inquiry (e.g., searching in a table, a database, or another data structure), or ascertaining as "determining" or "deciding". Also, "determining" and "deciding" may include regarding receiving (e.g., receiving information), transmitting (e.g., transmitting information), input, output, or accessing (e.g., accessing data in a memory) as "determining" or "deciding". Also, "determining" and "deciding" may include regarding resolving, selecting, choosing, establishing, comparing, or the like as "determining" or "deciding". That is, "determining" and "deciding" may include regarding some operation as "determining" or "deciding". Also, "determining (deciding)" may be read as "assuming", "expecting", "considering", or the like.

The terms "connected", "coupled", or any variation thereof mean any direct or indirect connection or coupling between two or more elements, and can include the presence of one or more intermediate elements between two elements "connected" or "coupled" to each other. The coupling or connection between elements may be physical, logical, or a combination thereof. For example, "connection" may be read as "access". As used in the present disclosure, two elements can be considered to be "connected" or "coupled" to each other using at least one of one or more wires, cables, and printed electrical connections, and as some non-limiting and non-inclusive examples, using electromagnetic energy having wavelengths in a radio frequency region, a microwave region, and a light (both visible and invisible) region, and the like.

Reference Signal can be abbreviated as RS, and may be referred to as a Pilot according to the standard applied.

The description "based on" used in the present disclosure does not mean "based only on" unless explicitly stated otherwise. In other words, the description "based on" means both "based only on" and "based at least on".

Any reference to elements using designations such as "first", "second", and the like used in the present disclosure does not generally limit the quantity or order of those elements. These designations can be used in the present disclosure as a convenient method for distinguishing between two or more elements. Therefore, references to first and second elements do not imply that only two elements can be employed or that the first element must precede the second element in some way.

### "Means" in the configuration of each device described above may be replaced with "unit", "circuit", "device", or the like.

In the present disclosure, when "include", "including", and variations thereof are used, these terms are intended to be inclusive, similar to the term "comprising". Furthermore, the term "or" used in the present disclosure is intended not to be an exclusive OR.

A radio frame may be configured by one or a plurality of frames in a time domain. Each of one or a plurality of frames in the time domain may be referred to as a subframe. A subframe may be further configured by one or a plurality of slots in the time domain. A subframe may be a fixed time length (e.g., 1 ms) independent of numerology.

Numerology may be a communication parameter applied to at least one of transmission and reception of a certain signal or channel. Numerology may indicate at least one of, for example, SubCarrier Spacing (SCS), bandwidth, symbol length, cyclic prefix length, Transmission Time Interval (TTI), number of symbols per TTI, radio frame configuration, specific filtering processing performed by a transceiver in a frequency domain, specific windowing processing performed by a transceiver in a time domain, and the like.

A slot may be configured by one or a plurality of symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of minislots. Each minislot may be configured by one or a plurality of symbols in the time domain. Also, a minislot may be referred to as a subslot. A minislot may be configured by fewer symbols than a slot. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

A radio frame, a subframe, a slot, a minislot, and a symbol all represent a time unit when transmitting a signal. A radio frame, a subframe, a slot, a minislot, and a symbol may be referred to by other names corresponding thereto, respectively.

For example, one subframe may be referred to as a Transmission Time Interval (TTI), a plurality of consecutive subframes may be referred to as a TTI, or one slot or one minislot may be referred to as a TTI. That is, at least one of a subframe and a TTI may be a subframe (1 ms) in existing LTE, may be a period shorter than 1 ms (e.g., 1 to 13 symbols), or may be a period longer than 1 ms. Note that the unit representing TTI may be referred to as a slot, a minislot, or the like instead of a subframe.

Here, TTI refers to, for example, a minimum time unit of scheduling in radio communication. For example, in an LTE system, a base station performs scheduling to allocate radio resources (frequency bandwidth, transmission power, etc. usable in each terminal) to each terminal in TTI units. Note that the definition of TTI is not limited to this.

TTI may be a transmission time unit of a channel-coded data packet (transport block), code block, codeword, or the like, or may be a processing unit of scheduling, link adaptation, or the like. Note that, when TTI is given, a time interval (e.g., the number of symbols) in which a transport block, code block, codeword, or the like is actually mapped may be shorter than the TTI.

Note that, when one slot or one minislot is referred to as a TTI, one or more TTIs (that is, one or more slots or one or more minislots) may be a minimum time unit of scheduling. Also, the number of slots (number of minislots) constituting the minimum time unit of scheduling may be controlled.

A TTI having a time length of 1 ms may be referred to as a normal TTI (TTI in LTE Rel. 8 to 12), a normal TTI, a long TTI, a normal subframe, a normal subframe, a long subframe, a slot, or the like. A TTI shorter than the normal TTI may be referred to as a shortened TTI, a short TTI, a partial or fractional TTI, a shortened subframe, a short subframe, a minislot, a subslot, a slot, or the like.

Note that a long TTI (e.g., normal TTI, subframe, etc.) may be replaced with a TTI having a time length exceeding 1 ms, and a short TTI (e.g., shortened TTI, etc.) may be replaced with a TTI having a TTI length less than the TTI length of the long TTI and 1 ms or more.

A resource block (RB) is a resource allocation unit in the time domain and the frequency domain, and may include one or a plurality of consecutive subcarriers in the frequency domain. The number of subcarriers included in an RB may be the same regardless of numerology, and may be, for example, 12. The number of subcarriers included in an RB may be determined based on numerology.

Also, the time domain of an RB may include one or a plurality of symbols, and may be a length of one slot, one minislot, one subframe, or one TTI. One TTI, one subframe, and the like may be configured by one or a plurality of resource blocks, respectively.

Note that one or a plurality of RBs may be referred to as a Physical Resource Block (Physical RB, PRB), a Sub-Carrier Group (SCG), a Resource Element Group (REG), a PRB pair, an RB pair, or the like.

Also, a resource block may be configured by one or a plurality of Resource Elements (RE). For example, one RE may be a radio resource region of one subcarrier and one symbol. A Bandwidth Part (BWP) (may be referred to as a partial bandwidth, etc.) may represent a subset of consecutive common resource blocks (common RBs) for a certain numerology in a certain carrier. Here, a common RB may be identified by an index of an RB based on a common reference point of the carrier. A PRB may be defined in a certain BWP and numbered within the BWP.

BWP may include a BWP for UL (UL BWP) and a BWP for DL (DL BWP). One or a plurality of BWPs may be configured within one carrier for a UE.

At least one of the configured BWPs may be active, and the UE may not assume transmitting or receiving a predetermined signal/channel outside the active BWP. Note that "cell", "carrier", and the like in the present disclosure may be read as "BWP".

The structures of the radio frame, subframe, slot, minislot, symbol, and the like described above are merely examples. For example, configurations such as the number of subframes included in a radio frame, the number of slots per subframe or radio frame, the number of minislots included in a slot, the number of symbols and RBs included in a slot or a minislot, the number of subcarriers included in an RB, and the number of symbols, symbol length, Cyclic Prefix (CP) length, and the like in a TTI can be changed in various ways.

"Maximum transmission power" described in the present disclosure may mean a maximum value of transmission power, may mean the nominal UE maximum transmit power, or may mean the rated UE maximum transmit power.

In the present disclosure, when articles are added by translation, for example, a, an, and the in English, the present disclosure may include that nouns following these articles are plural.

In the present disclosure, the term "A and B are different" may mean "A and B are different from each other". Note that the term may mean "A and B are different from C, respectively". Terms such as "separated", "coupled", and the like may be interpreted similarly to "different".

Although the present disclosure has been described in detail above, it is obvious to those skilled in the art that the present disclosure is not limited to the embodiments described in the present disclosure. The present disclosure can be implemented as modifications and variations without departing from the spirit and scope of the present disclosure defined by the description of the claims. Therefore, the description of the present disclosure is for the purpose of illustration and description, and does not have any limiting meaning to the present disclosure.

### (Supplementary Note)

The disclosure described above may be expressed as follows.

A first feature is a base station comprising: a transmission unit configured to notify that the base station operates in a first duplex scheme in which transmission and reception are performed using resources overlapping in a time domain and a frequency domain, and notify a position of a subband in a second duplex scheme in which transmission or reception is performed for each subband constituting a band of a time division duplex scheme; and a control unit configured to indicate a transmission/reception direction of each terminal in the resources or the subband via a terminal-specific parameter.

A second feature is the base station according to the first feature, wherein the control unit indicates the transmission/reception direction via a terminal-specific slot format indicator which is the terminal-specific parameter.

A third feature is the base station according to the first feature, wherein the control unit indicates positions of the resources in the time domain and the frequency domain via the terminal-specific parameter.

A fourth feature is the base station according to the third feature, wherein the control unit semi-statically indicates the positions of the resources via the terminal-specific parameter included in configuration information of a radio resource control layer.

A fifth feature is the base station according to the third feature or the fourth feature, wherein the control unit dynamically indicates the positions of the resources via the terminal-specific parameter included in downlink control information.

A sixth feature is a radio communication method comprising the steps of: notifying that operation is performed in a first duplex scheme in which transmission and reception are performed using resources overlapping in a time domain and a frequency domain; notifying a position of a subband in a second duplex scheme in which transmission or reception is performed for each subband constituting a band of a time division duplex scheme; and indicating a transmission/reception direction of each terminal in the resources or the subband via a terminal-specific parameter.

### DESCRIPTION OF REFERENCE NUMERALS

10 Radio communication system
20 NG-RAN
100 Base station
110 Radio signal transmission/reception unit
120 Amplifier unit
130 Modulation/demodulation unit
140 Control signal/reference signal processing unit
150 Encoding/decoding unit
160 Data transmission/reception unit
170 Control unit
200 Terminal
210 Radio signal transmission/reception unit
220 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driving assistance system unit
2031 Microprocessor
2032 Memory (ROM, RAM)
2033 Communication port (IO port)

## Claims

1. A base station comprising:
a transmission unit configured to notify that the base station operates in a first duplex scheme in which transmission and reception are performed using resources overlapping in a time domain and a frequency domain, and notify a position of a subband in a second duplex scheme in which transmission or reception is performed for each subband constituting a band of a time division duplex scheme; and
a control unit configured to indicate a transmission/reception direction of each terminal in the resources or the subband via a terminal-specific parameter.

2. The base station according to claim 1, wherein the control unit indicates the transmission/reception direction via a terminal-specific slot format indicator which is the terminal-specific parameter.

3. The base station according to claim 1, wherein the control unit indicates positions of the resources in the time domain and the frequency domain via the terminal-specific parameter.

4. The base station according to claim 3, wherein the control unit semi-statically indicates the positions of the resources via the terminal-specific parameter included in configuration information of a radio resource control layer.

5. The base station according to claim 3, wherein the control unit dynamically indicates the positions of the resources via the terminal-specific parameter included in downlink control information.

6. A radio communication method comprising the steps of:
notifying that operation is performed in a first duplex scheme in which transmission and reception are performed using resources overlapping in a time domain and a frequency domain;
notifying a position of a subband in a second duplex scheme in which transmission or reception is performed for each subband constituting a band of a time division duplex scheme; and
indicating a transmission/reception direction of each terminal in the resources or the subband via a terminal-specific parameter.
